# EUROPEAN PATENT SPECIFICATION

(11) **EP 4 076 895 B1**
(45) Date of publication and mention of the grant of the patent: **10.12.2025**
(21) Application number: 20838300.0
(22) Date of filing: 18.12.2020
(51) Int. Cl.: B29C 45/16, A47J 36/02, A47J 47/14, B29C 45/33, A47J 37/08, A47J 27/21, A47G 19/12, B29C 45/00, B29C 45/26, B29L 31/00

(54) **APPARATUS AND METHOD FOR THE PRODUCTION OF A COMPONENT IN PLASTIC MATERIAL**
VORRICHTUNG UND VERFAHREN ZUR HERSTELLUNG EINES BAUTEILS AUS KUNSTSTOFF
APPAREIL ET PROCÉDÉ DE PRODUCTION D'UN ÉLÉMENT EN MATIÈRE PLASTIQUE

(30) Priority: 20.12.2019 IT 201900025120
(43) Date of publication of application: 26.10.2022
(73) Proprietor: De' Longhi Appliances S.r.l. Con Unico Socio, 31100 Treviso (IT)
(72) Inventor: MAZZON, Renzo, 31100 TREVISO (IT); VISENTIN, Silvio, 31100 TREVISO (IT)
(74) Representative: Petraz, Gilberto Luigi
(86) International application number: PCT/IT2020/050316
(87) International publication number: WO 2021/124372

(56) References cited:
- EP-A1- 1 568 460
- EP-A1- 2 079 640
- EP-A1- 2 159 031
- EP-A2- 0 465 356
- WO-A1-2015/157079
- GB-A- 1 503 039
- JP-A- H08 282 733
- JP-A- H09 174 599
- JP-A- H10 145 056
- TW-A- 201 043 438
- US-A- 5 125 816
- US-A1- 2002 070 224
- US-A1- 2004 227 271
- ANONYMOUS: "Russell Hobbs Mode Kettle 21400 - Black: Amazon.co.uk: Kitchen & Home", 21 March 2018 (2018-03-21), XP055791311, Retrieved from the Internet <URL:https://www.amazon.co.uk/Russell-Hobbs-Mode-Kettle-21400/dp/B00SBEKEU8/ref=zg_bs_3538311031_28?_encoding=UTF8&psc=1&refRID=FYEVW47AFXVQG60J23M0> [retrieved on 20210330]
- ANONYMOUS: "Russell Hobbs 22851 Brita Filter Purity Electric Kettle, Illuminating Filter Kettle with Brita Maxtra+ Cartridge Included, 3000 W, 1.5 Litre, Plastic: Amazon.co.uk: Kitchen & Home", 28 June 2016 (2016-06-28), XP055791303, Retrieved from the Internet <URL:https://www.amazon.co.uk/Russell-Hobbs-22851-Filter-Transparent/dp/B01GFPWHZ4?th=1>

## Description

### FIELD OF THE INVENTION

Embodiments described here concern an apparatus and a method for the production of a component having a body made of plastic material and provided with at least one transparent area, for example a window, which allows to look inside the body itself, or a peripheral strip, or other.

The component in particular is suitable to be used as a containing body, or casing, of a household appliance, such as for example a kettle, a toaster, a vacuum cleaner, a coffee machine, a blender, an iron, or suchlike.

The present invention also concerns a component made of plastic material and a household appliance, or a receptacle, comprising this component.

### BACKGROUND OF THE INVENTION

In the field of household appliances it is known to produce components, or finished objects, having two or more layers of plastic material at least partly overlapping each other, in order to provide a determinate aesthetic appearance. These components can be used to form the external structure of artefacts, or objects, such as for example, but not limited to, household appliances for home use, or also carafes, bowls, and suchlike.

The ever increasing focus on aesthetic research in the design and production of household appliances for home use to satisfy the tastes of consumers is also known, providing an aesthetic appearance that is attractive, recognizable and which allows to stand out from similar solutions on the market.

For example, components are known that define the containing body of a kettle, comprising a first layer of transparent plastic material and a second layer of metal material on which a plurality of through holes are made, through which the first layer, and therefore the inside of the kettle itself, is visible.

This solution, however, requires the first layer and the second layer to be made separately, and then coupled and connected to one another, with consequent problems of reciprocal coupling and seal.

It is also known to produce transparent areas, such as windows and/or lenses, in the containing body of a kettle, or other household appliance, to be able to see inside the product or control instruments.

One problem with making the transparent areas is to ensure an adequate seal of the window, or lens, preventing the leakage of liquids, vapors and/or dust.

Furthermore, other functional parts, such as for example the pouring spout, could also, for aesthetic reasons, be made of a different material with respect to the main body and for this reason need to be made separately from the latter.

One problem related to the coupling of additional functional parts is that of guaranteeing the hermetic seal thereof, in order to avoid leakages and infiltrations of liquids between the various hollow spaces.

Solutions are known which provide to produce an element made of transparent material, to insert it into a mold, and subsequently inject a second opaque material for the production of the main body, incorporating the transparent element therein. These solutions, as well as requiring dedicated molds, have the disadvantage that defects can be generated in correspondence with the joint zone between the transparent element and the injected material, which can compromise the aesthetic appearance of the component, with consequent scrappage and production waste.

Solutions are also known which provide to make a containing body that has an aperture, or a slot, with a shape correlated to the window to be obtained, and subsequently insert in it an element previously made by molding, or other technique, made of transparent material, generally made of plastic material, or glass, having a shape suitable to close the aperture, and attach it to the containing body.

Alternatively, the aperture, or slot, able to house the transparent element can be obtained by means of mechanical working processes by chip removal. The costs to equip the machines for this working can also be very high.

The transparent element, or in general the functional elements made with different materials, can be attached by means of attachment and seal members, or glued by means of adhesives, or heat welded with different techniques, such as ultrasound, vibrations, or induction.

These methods are burdensome in terms of assembly times, requiring a large number of process steps, including manual ones, and also require particular expensive measures to guarantee the hermetic seal of the window.

One disadvantage is also that the assembly procedures of the element that makes up the window can ruin the element itself, compromising its transparency or scratching it.

Another disadvantage is that during the assembly step the aperture of the molded component and the transparent element may not be perfectly complementary or aligned, thus causing production scrappage, or leakages of liquids and/or dust into the finished product.

Document US2004/0227271 discloses a method and an apparatus for producing, with a double color, a top of a key for various types of electronic devices. US'271 describes a mold in which the punch and die are both provided with protruding portions which, during a first step of injecting a first material, are put into contact with each other so as to produce an empty space in the first layer. The empty space is subsequently filled with a second material which produces a second layer which covers the first layer during a second injection step. The second material does not fill the entire thickness of the empty space of the first layer, but only part of it, that is, until it comes into contact with the protruding portion of the punch. The solution described in US'271 concerns a component with very small sizes, that is, the sizes of a key or button, and has the disadvantage of not allowing to obtain a completely transparent window because, since during the first injection step the punch and the die are put into contact for the entire extension of the empty space, the punch can be damaged and present surface scratches, which therefore remain impressed and visible in the second layer.

Document EP 1 568 460 Al discloses a method and an apparatus for creating distinct zones in a mold, so that they can subsequently be filled with different materials. In fact, there is a single layer of material for each zone into which the mold is divided.

Document US 5,125,816 A discloses an apparatus for molding plastic articles in two colors, particularly the bodies of magnetic type cassettes.

Document EP 2159031 A1 discloses a mould and method for manufacturing double-layered preforms by overmoulding and relative double-layer preform.

Therefore, there is a need to perfect an apparatus and a method for the production of a component made of plastic material provided with at least one transparent area, or window that can overcome at least one of the disadvantages of the state of the art.

Another purpose of the present invention is to perfect an apparatus and a method which allow to obtain a component having an area, or window, with high transparency, and substantially free of scratches or working marks.

Another purpose of the present invention is to provide an apparatus and a method for the production of a component having a transparent window that is completely hermetically sealed and prevents any type of leakage from the inside to the outside, or vice versa.

Another purpose is to provide an apparatus and a method for the production of a plastic component that are fast and allow high productivity and efficiency, while at the same time allowing to greatly reduce production scrappage due to windows that are not sealed or have defects that ruin their transparency.

Another purpose is to perfect a method for the production of a component made of plastic material that is effective and economical, allowing to obtain high productivity and at the same time to reduce overall costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, the present invention concerns a method and an apparatus to produce a component made of plastic material suitable to make up the containing body, the casing, the shell, the external structure and/or the external body, or at least part thereof, of household appliances for home use.

Examples of application of the component according to the invention can be, for example, household appliances such as a kettle, toaster, vacuum cleaner, electric brushes, blenders, microwave ovens, electric ovens, fryers, teapots, coffee machines, ice cream machines, kneading machines, hair dryers, irons and suchlike.

A component according to the invention comprises a body made of plastic material comprising a first internal layer of a first material, and a second external layer of a second material, which at least partly covers the first internal layer.

The second layer completely covers the first layer.

The first material is opaque, or has a color, or a plurality of colors, while the second material is at least partly transparent, allowing the first opaque layer to be visible through it. This allows to confer a three-dimensional and partly convex appearance on the final component.

The component comprises at least one transparent area, made integrally and in a single body with the body of the component and defined by the second transparent material, which extends inside and/or above an exposed area of the first internal layer.

The transparent area can be made in the shape of a transparent window. Providing a transparent window, made directly using the second transparent material, allows to increase the speed of the production of the product, reducing both the working operations, and also the number of molds and storage spaces required.

Furthermore, since the window is made in continuity with the external surface of the component, there is no joint line between the internal environment and the external environment, therefore a perfect hermetic seal of the window itself is guaranteed.

According to other embodiments, the second transparent external layer extends, at least in an axial direction, beyond an end edge of the first internal layer. In this way, the component has a transparent peripheral strip, which confers an effect of transparency and lightness.

According to some embodiments, the second external layer can extend beyond the edges of the internal layer, that is, in correspondence with areas left exposed by the first material, itself defining, on its own, one or more transparent portions of the body of the component, such as for example a pouring spout, or a handle in the case of a kettle, or of a carafe, or other ornamental parts.

An apparatus for the production of a component according to the invention comprises:
- a first molding assembly, comprising a punch having a contrast surface and a first matrix having a first molding surface, suitable to define between them a first molding volume and a first injection unit configured to inject a first plastic material into the first molding volume;
- a second molding assembly, comprising a second matrix having a second molding surface suitable to define, together with the first internal layer of the component and with the punch, a second molding volume, and a second injection unit configured to inject a second plastic material into the second molding volume.

At least one of either the first matrix or the punch comprises at least one coupling protuberance configured to limit at least one portion of the first molding volume to produce at least one exposed area in the first layer, and the second molding volume extends inside the at least one exposed area of the first layer.

The at least one coupling protuberance comprises a protruding abutment element configured to position itself, during use, in contact with one of either the contrast surface of the punch, or respectively the first molding surface of the first matrix, so as to limit the first molding volume and define at the same time an empty space, or cavity between the punch and the first molding surface in correspondence of the exposed area, therefore keeping them separate and not in contact.

In this way, it is possible to use the same punch for the production of the component, both during a step of producing the first layer and also during the step of producing the second layer, while preserving it brightness. Therefore it is possible to obtain high speed and productivity, and at the same time guarantee high transparency of the transparent areas.

This is even more efficient in the event that the coupling protuberance is provided on the first molding matrix.

Embodiments described here also concern a method for the production of a component, which comprises:
- a first step of injecting a first opaque plastic material into a first molding volume defined between a punch and a first matrix provided with a first molding surface to make a first layer, wherein during the first step the method provides to limit at least one portion of the first molding volume to produce an exposed area in the first layer;
- a second step of injecting a second at least partly transparent plastic material into a second molding volume defined between the first layer obtained in the first injection step, the punch, and a second matrix to make a second layer, wherein during the second injection step said method provides to cover the exposed area of the first layer with the second material so as to obtain a transparent area.

During the first injection step the method provides to position in contact with one of either the contrast surface of the punch or the first molding surface at least one protruding abutment element of a coupling protuberance of the first matrix, or respectively of the punch, so as to limit the first molding volume and at the same time define an empty space, or cavity, between the punch and the first molding cheek in correspondence with the exposed area, so as to keep the punch and the first matrix separate and preserve the brightness and shine of the contrast surface of the punch.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a schematic view of a component in accordance with one embodiment of the present invention, applied to a household appliance, in the example shown a kettle;
- fig. 2 is a section view of fig. 1 along the section line II-II;
- fig. 3 is an enlarged detail of a portion of fig. 2;
- fig. 4 is a schematic view of a component in accordance with another embodiment of the present invention applied to a different household appliance, in the example case a toaster;
- fig. 4a is a three-dimensional view of a detail of a component according to the invention in accordance with other embodiments;
- fig. 4b is a three-dimensional view of a portion of the component according to another embodiment;
- fig. 4c is a three-dimensional view of a portion of the component according to another embodiment;
- fig. 5 is a schematic view of an apparatus for the production of a component made of plastic material according to some embodiments;
- fig. 6 is a vertical section view of a component according to the invention at the end of a first step of injecting a first material;
- fig. 7 is a vertical section view of a component according to the invention at the end of a second step of injecting a second material;
- fig. 8 is an enlarged detail of the apparatus of fig. 5 during the first injection step;
- fig. 9 is a section view of the apparatus of fig. 5 along the section line IX-IX;
- fig. 9a is an enlarged detail of fig. 9;
- fig. 10 is a section view along the line X-X in fig. 6;
- fig. 11 is a section view of the apparatus of fig. 5 along the section line XI-XI;
- fig. 12 is a section view along the line XII-XII of fig. 7.

### DESCRIPTION OF EMBODIMENTS

We will now refer in detail to the possible embodiments of the invention, of which one or more examples are shown in the attached drawings. Each example is supplied by way of illustration of the invention and shall not be understood as a limitation thereof.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

The attached drawings are used to describe embodiments of a component 10 made of plastic material suitable to make up the containing body, the casing, the shell, the external structure and/or the external body, or at least part thereof, of household appliances 50 for home use, or other objects, such as, for example bowls, carafes, thermos flasks, and suchlike.

Although hereafter in the description we will refer, by way of example, to household appliances such as a kettle 50A and a toaster 50B, it is understood that the component 10 according to the invention can define a containing body, or casing, of other types of household appliances, such as vacuum cleaners, electric brushes, blenders, microwave ovens, electric ovens, fryers, teapots, coffee machines, ice cream machines, kneading machines, hair dryers, irons and suchlike.

The component 10 according to the invention comprises a first internal layer 11 and a second external layer 12 at least partly overlapping the first internal layer 11.

According to some embodiments, the component 10 has only two layers, first 11 and second 12.

The first layer 11 and the second layer 12 can be made of plastic materials, for example heat-resistant polymeric materials.

According to possible embodiments, the first layer 11 and the second layer 12 can be made with materials having similar characteristics and properties.

According to possible embodiments, the first layer 11 and the second layer 12 can be made with materials having non homogeneous characteristics and properties.

According to some embodiments, for example applicable to household appliances for processing foodstuffs, the first layer 11 and the second layer 12 can be made with resins suitable for applications in the field of foodstuffs such as for example polypropylene.

According to possible embodiments, it can be provided that only the first layer 11 is suitable for applications in the field of foodstuffs while the second layer 12 is not.

According to other embodiments, as a function of the applications, the first layer 11 and/or the second layer 12 can be made with thermoplastic resins of different nature.

The first layer 11 is made with a first opaque material, or with a color, or a plurality of colors, while the second layer 12 is made with a second at least partly transparent material, allowing the first internal opaque layer 11 to be visible through it.

By transparent or semi-transparent layer we mean that it can be passed through in all its thickness by luminous radiations allowing objects located beyond it to be visible.

This allows to confer a three-dimensional and partly convex appearance on the final component 10.

The first layer 11 and the second layer 12 can be obtained by means of bi-injection processes.

The second external layer 12 completely covers the first internal layer 11.

The component 10 comprises at least one transparent area T, made integrally with the body of the component 10, and obtained directly with the second transparent material.

As will be better explained in the following description, the at least one transparent area T is obtained by providing to make a first layer 11 with at least one exposed area S, and fill the exposed area S with the second transparent material.

The at least one transparent area T can form a window 22, a peripheral strip 25, or also some portions of the component 10, such as, by way of example, in the case of a kettle 50A, a spout 51 or a handle 52.

In correspondence with the transparent areas T, since the first internal layer 11 is not present, the second external layer 12 substantially fills the exposed areas S of the first internal layer 11, thus defining part of the internal surface 13 of the component 10, in continuity with the first material.

The transparent window 22 allows a user to look through it.

For example, in the case of a kettle 50A, by means of the transparent window 22, the user can check the level of water contained in the containing body consisting of the component 10. In this case, the transparent window 22 can extend in a vertical direction along the containing body of the kettle 50A.

In other forms of application, the window 22 can be configured to allow the user to see possible additional features of the household appliance, for example a thermostat or a timer of a 50B toaster.

In other forms of embodiment, the window 22 can be configured to allow the user to see possible internal parts of the household appliance 50 and/or to have visibility of the product being cooked, or also verify the accumulation of dust in a collection container of a vacuum cleaner.

As we said, the window 22 can be made directly by means of a second transparent external layer 12.

In particular, the first layer 11 can contain an aperture 21, or a slot shaped substantially with the shape of the window 22 to be obtained.

The second layer 12 which, in fact, covers the first layer 11 can fill, and completely cover the aperture 21 or slot, in continuity with the external surface 15.

According to possible solutions, the component 10 can provide a different surface finish of the second external layer 12 in correspondence with the window 22, for example a substantially flat and smooth finish, to allow a better visibility through it.

Advantageously, the window 22 thus made does not require any particular assemblies, or any packing or other devices able to guarantee its hermetic seal. In fact, the window 22 thus made guarantees an optimal seal and prevents possible liquids, steam, or dust contained in the household appliance both from leaking from the inside toward the outside, and also, conversely, from penetrating from the external environment into the internal one.

In embodiments, the second layer 12 has an external end edge 23 which extends, in an axial direction X, beyond an internal end edge 24 of the first layer 11.

More in particular, in said embodiments, a portion of the second layer 12 in fact protrudes in the axial direction beyond the first layer 11.

In this way, the component 10 has a transparent area T defined by a peripheral strip 25 having a single layer made with the second material. This transparent peripheral strip 25 confers a light and three-dimensional appearance on the component 10.

The second layer 12 can extend, with respect to the main body of the component 10, in other parts, such as for example the pouring spout 51 or the handle 52 of a kettle 50A, in order to define other transparent areas T and confer a further sense of lightness.

According to some embodiments, not covered by the claims, the first layer 11 has a first thickness S1 and the second layer 12 has a second thickness S2, which is greater than the first thickness S1.

According to some embodiments, not covered by the claims, the first thickness S1 and the second thickness S2 can be defined as the maximum thicknesses of the respective layer.

Advantageously, the ratio between the second thickness S2 of the second layer 12 and the first thickness S1 of the first layer 11 can be comprised in a range from 1.05 to 2.5, more preferably from 1.1 to 2.

The first layer 11 comprises a first surface 13 defining an internal surface of the component 10 and facing, during use, toward the inside of the household appliance 50.

In the case of a kettle 50A, the first surface 13 can itself define the internal surface of the water containing compartment.

The first layer 11 also comprises a second surface 14, opposite the first surface 13, on which the second external layer 12 is positioned in contact.

According to some embodiments, the first internal surface 13 can have a smooth and uniform development, that is, without notches and/or protrusions.

The second layer 12 has an external surface 15 which defines, during use, an external surface of the component 10, opposite the internal surface 13, and therefore an external surface of the household appliance 50 on which it is applied.

According to some embodiments, not covered by the claims, the external surface 15 has a three-dimensional finish, and comprises at least one portion from which a plurality of aesthetic reliefs 16 extend, suitable to confer a pleasant aesthetic appearance on the component 10.

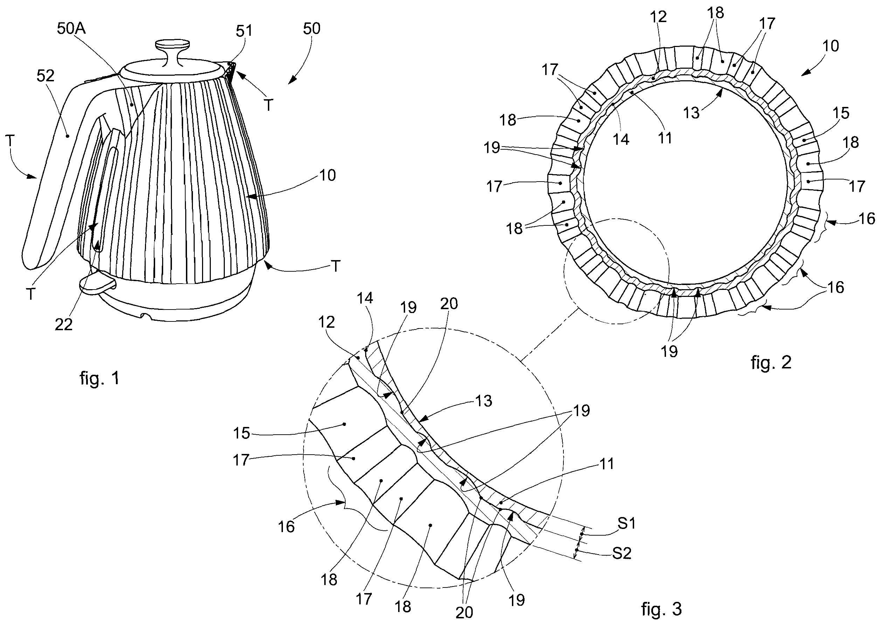

Examples of possible embodiments of the aesthetic reliefs 16, for example shown in figs. 1, 2, 3, 4, 4a and 4b, can comprise reliefs in the shape of parallel ribs, bubbles, or hemispheres, diamond-shaped workings, or other geometric or non-geometric shapes.

In particular, the external surface 15 has an alternation of protruding portions 17 and recessed portions 18 which confer the three-dimensional appearance on the component 10 and, in general, on the household appliance 50.

According to some embodiments, the protruding portions 17 and the recessed portions 18 correspond, respectively, to zones of the component 10 with differentiated thickness with respect to the internal surface 13.

According to a possible embodiment, the protruding portions 17 are configured as vertical ribs adjacent to each other and disposed substantially parallel to each other.

According to possible variants, ribs disposed horizontally, or oblique, or also protrutions or reliefs with a helix or spiral-shaped development can be provided.

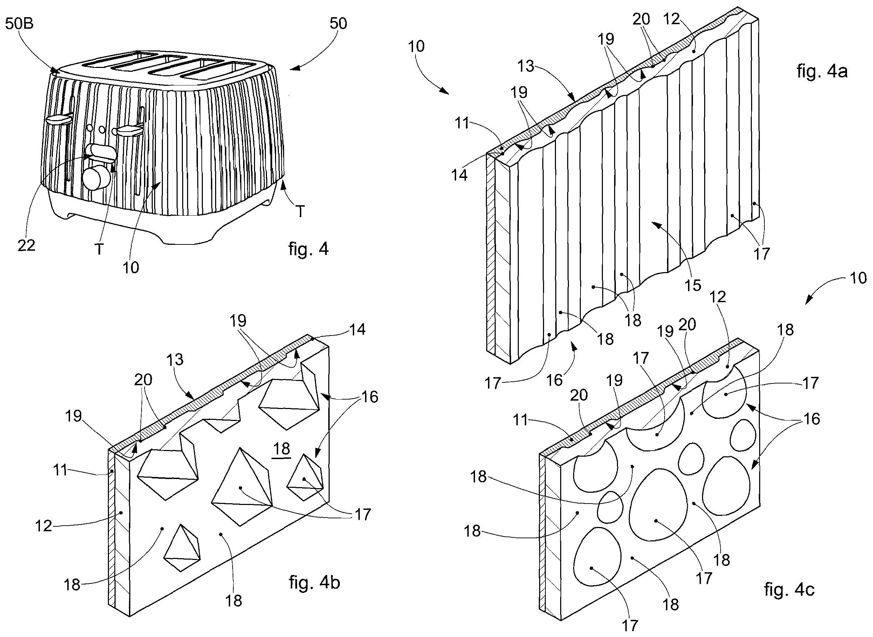

According to another embodiment, shown in fig. 4a, the protruding portions 17 can be configured as portions of spheres, or bubbles, adjacent to each other, distributed uniformly or according to a desired disposition.

According to a further embodiment, shown in fig. 4b, the protruding portions 17 can be configured as polygonal-based pyramids, in this specific case of a rectangular type, adjacent to each other.

According to other variants, not shown, the reliefs 16 can take on other shapes, even non-geometric ones, for example flowers, hearts, and suchlike.

According to some embodiments, the component 10 can have a tubular shape.

The cross section of the component 10, as a function of needs or the application, can have a circular, polygonal, or oval shape, or with a perimeter comprising a combination of rectilinear and curved segments.

Furthermore, the component 10 can have a constant cross section along an axial development, or variable with concave or convex portions.

The component 10 can have an open curved shape, and be configured to be connected to other similar components 10, or even to different elements, in order to make up, together, a containing body, or a casing, of a household appliance 50.

According to some embodiments, not covered by the claims, the first internal layer 11 comprises, made in its thickness, filling channels, or cavities 19.

The filling channels or cavities 19 have a shape and position correlated to those of the recessed portions 18 of the external surface 15.

In particular, the filling cavities 19 can be made in the thickness of the first layer 11, in correspondence with the second surface 14, so as to follow the shape of the external surface 15 of the second external layer 12 defined by the aesthetic reliefs 16, that is by the alternation between the protruding portions 17 and the recessed portions 18.

Advantageously, the filling cavities 19 are able to compensate, at least in part, for the differences in thickness between the protruding portions 17 and the recessed portions 18.

In other words, at least in the zones where also the first internal layer 11 is present, the second external layer 12 has a substantially constant thickness along the transverse extension of the component 10 or, in any case, a substantially constant average thickness, with the exception of small deviations with respect to an average value, for example of the order of 10-20%.

The first internal layer 11 has an average thickness variable in a transverse direction of the component 10.

According to some embodiments, the transition zones 20, interposed between portions of the second surface 14 comprising the filling cavities 19 and portions of the second surface 14 not comprising the filling cavities 19, can be configured with a beveled shape, as shown for example in fig. 3.

Advantageously, the transition zones 20 with a beveled shape prevent, or at least limit, during the step of injecting the second material to produce the second layer 12, concentrations of heat and therefore unwanted re-melting of the first material which makes the first layer 11.

In this way, the erosion caused by the mechanical rubbing generated by the flow of the second material is also reduced.

Embodiments described here with reference to figs. from 5 to 12 also concern an apparatus 26 for the production of the component 10.

The apparatus 26 comprises a first molding assembly 27 configured to make the first layer 11 and a second molding assembly 28 configured to make the second layer 12.

In one embodiment of the apparatus 26, the first molding assembly 27 is positioned adjacent, adjoining and close to the second molding assembly 28.

According to some embodiments, the first molding assembly 27 and the second molding assembly 28 are located sequentially one after the other, and can be made to function in direct temporal succession in order to obtain the finished component 10 with a single process.

The first molding assembly 27 comprises a punch 29 and a first molding matrix 30 suitable to cooperate so as to define a first molding volume V1 between them, and a first injection unit 31 configured to inject the first plastic material into the first molding volume V1.

According to some embodiments, the first molding volume V1 has a first maximum width W1ₘₐₓ coherent with the first thickness S1 of the first layer 11.

According to some embodiments, the first injection unit 31 comprises first heating means 53 configured to heat the first plastic material to a first injection temperature T1.

The punch 29 has a contrast surface 32 configured to define, in negative, the shape of the internal surface 13 of the first layer 11 of the component 10.

According to some embodiments, the contrast surface 32 can be substantially uniform and smooth.

By way of example, in the case of a component 10 suitable to make a kettle 50A, the punch 29 can have a substantially truncated cone shape, whereas in the case of a component 10 suitable to make a toaster 50B, the punch 29 can have the shape of a parallelepiped with quadrangular cross section.

The first matrix 30 comprises a first molding surface 33 configured to define, in negative, the shape of the second surface 14 of the first layer 11.

According to some embodiments, the first molding matrix 30 can comprise one or more first molding cheeks 37 configured to be positioned, during use, one adjacent to the other so as to define a single first molding surface 33 of the first molding matrix 30.

According to some embodiments, the first molding surface 33 comprises at least one portion having first molding ridges 38 protruding, during use, inside the first molding volume V1.

The first molding ridges 38 define, in negative, the shape of the filling cavities 19 to be made in the first layer 11.

The second molding assembly 28 comprises a second molding matrix 34 having a second molding surface 35 suitable to define, in negative, the shape of the external surface 15 of the component 10.

The second molding matrix 34 is suitable to cooperate, during use, with the second surface 14 of the first layer 11 of material, to define a second molding volume V2 between them.

According to some embodiments, the second molding volume V1 has a second width W2ₘₐₓ, coherent with the second thickness S2 of the second layer 12, which is greater than the first width W1ₘₐₓ.

According to some embodiments, the ratio between the second width W2ₘₐₓ and the first width W1ₘₐₓ is comprised between 1.05 and 2.5, preferably between 1.1 and 2.

The second molding assembly 28 also comprises a second injection unit 36 configured to inject the second plastic material into the second molding volume V2.

According to some embodiments, the second injection unit 36 comprises second heating means 54 configured to heat the second plastic material to a second injection temperature T2.

According to some embodiments, the first heating means 53 and the second heating means 54 are able to be activated and adjusted independently of each other.

According to some embodiments, the second molding matrix 34 comprises one or more second molding cheeks 39.

In particular, the second molding cheeks 39 are configured to be positioned, during use, one adjacent to the other so as to define a single second molding surface 35 of the second molding matrix 34.

The first molding assembly 26 comprises at least one coupling protuberance 41 configured to define, in the first layer 11, an aperture 21, or a slot, or an exposed portion S without the first material, and at the same time keep the punch 29 and the first matrix 30 separate from each other.

According to some embodiments, the at least one coupling protuberance 41 is provided on one of the first molding cheeks 37.

In particular, the coupling protuberance 41 is configured to cooperate with the punch 29 so as to confine and limit a portion of the first molding volume V1 and prevent access of the first material therein, so as to obtain an exposed portion S in the first layer 11, that is, a substantially empty portion.

The coupling protuberance 41 is configured to produce a coupling and a minimum contact with the punch 29, in order to preserve the finish and the shine of the contrast surface 32 of the punch 29 in correspondence with one or more exposed zones S.

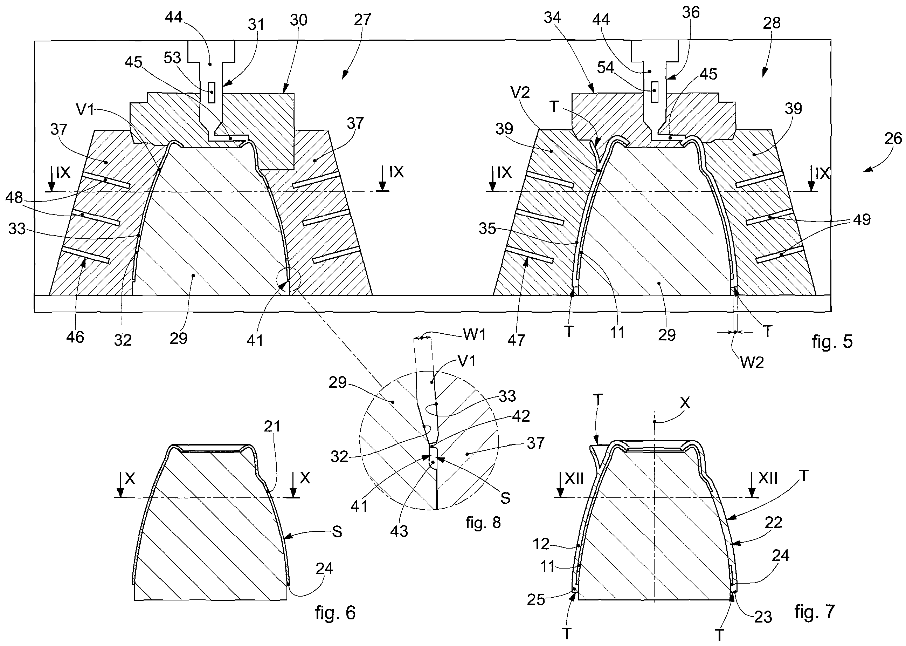

According to some embodiments, for example described with reference to fig. 8, the coupling protuberance 41 comprises at least one protruding abutment element 42, suitable to be positioned in contact with the contrast surface 32 of the punch 29, so as to define an empty space, or cavity 43 between the punch 29 and the respective first molding surface 33.

According to further embodiments, the coupling protuberance 41 can be provided on the punch 29, possibly providing to make the cavity 43 between the punch 29 and the first matrix 30 on the punch 29, and more specifically along the contrast surface 32.

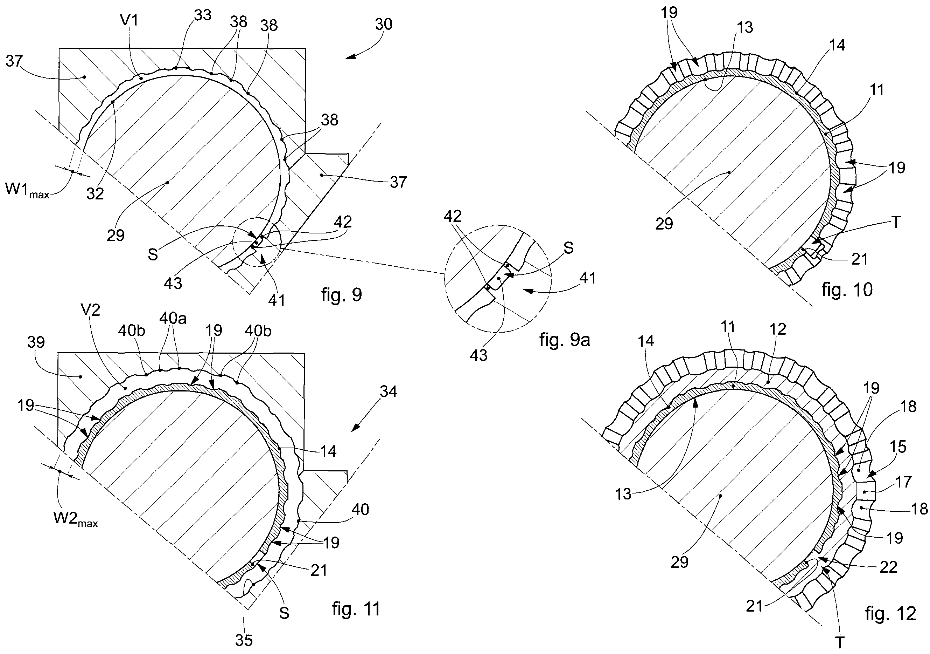

According to some embodiments, for example described with reference to fig. 10, the coupling protuberance 41 can comprise a pair of abutment elements 42, or even one annular-shaped abutment element, suitable to delimit the cavity 43, separating it from the first molding volume V1.

The abutment elements 42, during use, are configured to rest and press against the surface 32 of the punch 29 so as to guarantee the hermetic seal of the cavity 43.

In this way, the first molding volume V1 is limited in the corresponding exposed portions S in which an aperture 21 is provided in the first layer 11.

According to some embodiments, the cavity 43 can have a height, defined by the distance between the respective facing surfaces of the punch 29 and the first matrix 30, comprised between a few hundredths and a few tenths of a millimeter.

According to some embodiments, the abutment elements 42 have a width of a few tenths of a millimeter, for example comprised between 0.2 and 1.5 mm.

This width substantially corresponds to the overall width of the portion which is positioned in contact with one of either the contrast surface 32 or the first molding surface 33, measured with respect to a side that, during use, defines the edge of the exposed portion S.

A width value comprised between 0.2 and 0.9 mm allows to reduce the contact between the punch 29 and the matrix 30 to a minimum, obtaining a cavity 43 with a larger area.

A slightly greater width value, for example comprised between 0.9 and 1.5, allows, with the only disadvantage being a small reduction in the area of the cavity 43, to guarantee a hermetic seal between the punch 29 and the matrix 30 even with lower closing forces, or in the case of workings that require a lower degree of precision.

According to some embodiments, one or more coupling protuberances 41 can be present, having the same or different shapes from each other, as a function of the shape and size of the exposed portion S, or of aperture 21 to be obtained.

For example, in the case of a component 10 applied to a kettle 50A, there can be a first coupling protuberance 41A, suitable to make the window 22 for controlling the water level (fig. 10), a second coupling protuberance 41B for making the transparent peripheral strip 25 (fig. 10), and a third coupling protuberance 41 for making the spout 51.

In some embodiments, the abutment element 42 can be shaped according to the shape of the exposed portion S to be obtained in the component 10.

The abutment element 42 can have a closed-shape development which develops along a vertical portion of the first matrix 30, with an annular profile or comprising rectilinear segments and curved segments, suitable to limit an exposed area S in correspondence with a lateral wall of the first layer 11 of the component 10.

In other embodiments, the abutment element 42 can be shaped so as to define the shape of the end edge 24 of the first layer 11.

According to these solutions, the abutment element 42 can have an annular shape and develop in a direction orthogonal to the axis X, so as to contact the punch 29 along a perimeter, or circumference, thereof and limit the first molding volume V1 at the lower part.

Advantageously, the cavity 43 present between the punch 29 and the first molding matrix 30 allows to preserve the finish and the shine of the contrast surface 32 of the punch 29, even after several molding cycles.

According to some embodiments, not covered by the claims, on at least one portion of said second molding surface 35, multiple cavities 40a are made alternating with respective molding reliefs 40b.

In particular, the cavities 40a and the molding reliefs 40b are able to define, in negative, the shape of the aesthetic reliefs 16 present on the external surface 15.

The cavity 40a and the molding reliefs 40b therefore have a shape and size correlated to the shape and final size of the protruding portions 17 and of the recessed portions 18 of the external surface 15.

The cavities 40a and the molding reliefs 40b are correlated with the molding ridges 38 of the first molding matrix 30.

In other words, the cavities 40a and the molding reliefs 40b of the second molding matrix 34 have a shape, sizes and position coordinated with those of the molding ridges 38 of the first molding matrix 30.

In particular, the molding reliefs 40b are positioned, during use, in positions correlated with those of the molding ridges 38.

According to some embodiments, the first molding cheeks 37 and the second molding cheeks 39 are replaceable so that components 10 with different aesthetic shapes can be produced with the same apparatus 26.

For example, a plurality of sets of first molding cheeks 37 and second molding cheeks 39 having different surface finishes can be provided, as a function of the final appearance the component 10 has to have.

According to some embodiments, the first injection unit 31 and the second injection unit 36 each comprise at least one injection device 44 and at least one injection channel 45 able to fluidly connect a respective injection device 44 with one of either the first injection volume V1 or the second injection volume V2.

According to some embodiments, a plurality of injection devices 44 for each injection unit 31, 36 can also be provided.

According to some embodiments, at least one injection channel 45 is made in at least one of the first molding cheeks 37, and in at least one of the second molding cheeks 39.

According to some embodiments, not covered by the claims, the apparatus 26 can comprise, for each molding assembly 27, 28, a respective first cooling circuit 46 and a second cooling circuit 47.

According to some embodiments, the first cooling circuit 46 and the second cooling circuit 47 are independent of each other, and are configured to cool respectively the first layer 11 and the second layer 12 with respective cooling temperatures T3, T4 different from each other.

According to some embodiments, the first cooling circuit 46 is configured to cool the first layer 11 with a first cooling temperature T3 and the second cooling circuit 47 is configured to cool the second layer 12 with a second cooling temperature T4 lower than the first cooling temperature T3.

The first cooling circuit 46 comprises one or more cooling channels 48 and a unit for pumping a refrigerant fluid, or a heat exchanger with a refrigerating circuit, of the known type and not shown in the drawings.

The second cooling circuit 47 comprises one or more cooling channels 49 and a unit for pumping a refrigerant fluid, or a heat exchanger with a refrigerating circuit, of a known type and not shown in the drawings.

According to some embodiments, the cooling channels 48, 49 can be made through in at least one of the first molding cheeks 37, and/or second molding cheeks 38 and/or in the punch 29.

In particular, the cooling channels 48, 49 are configured to allow the passage of refrigeration fluids inside them, such as for example water, emulsions and/or oils.

Embodiments described here with reference to figs. 5 to 12 also concern a method for the production of the component 10 provided with at least one transparent area T.

The method comprises a first step of injecting a first opaque plastic material for the production of the first layer 11, and a second step of injecting a second transparent plastic material for the production of the second layer 12.

During the first injection step the method provides to limit at least one portion of the first molding volume V1 in order to produce at least one exposed area S in the first internal layer 11 and, during the second injection step, it provides to inject the second material into the second molding volume V2 in order to completely cover the first layer 11 and the at least one exposed area S of the first layer 11, thus obtaining the transparent area T.

For example, in order to make the window 22 the method provides to make an aperture 21, or a slot in the first layer 11, and cover the aperture 21, or slot, with the second material.

According to some embodiments, the method provides to make the first internal layer 11 with a first thickness S1 and the second external layer 12 with a second thickness S2, greater than the first thickness S1.

According to some embodiments, the method provides to inject the first material with first operative parameters, the second material with second operative parameters, different from the first operative parameters.

According to some embodiments, thanks to the different and greater thickness of the second layer 12 with respect to the first layer 11, for the production of the second layer 12 it is possible to use lower work parameters of temperatures and pressures, thus improving the stability and brightness of the surfaces, also reducing possible deformations in the post-shrinkage step.

The method provides to reciprocally position a punch 29 and a first molding matrix 30 defining a first molding volume V1 between them, and inject the first material into the first volume V1 thus defined. The first molding volume V1 is defined between the contrast surface 32 of the punch 29 and the first molding surface 33, as shown in the right hand portion of fig. 5 and in fig. 9.

According to some embodiments, the method provides to inject the first material with defined temperature and pressure parameters.

According to some embodiments, the method provides - at least in the case of propylene - to inject the first material with a first temperature T1 comprised between 150 °C and 260 °C.

According to other embodiments, the first temperature T1 is comprised in the range from 120 °C to 240 °C, preferably from 160 °C to 220 °C, even more preferably from 180 °C to 200 °C.

According to one embodiment, the method provides to inject the first material with a first pressure P1 comprised between 700 kg/cm² and 1300 kg/cm².

According to other embodiments, the first pressure P1 can be comprised between 750 kg/cm² and 1250 kg/cm², even more preferably between 800 kg/cm² and 1200 kg/cm².

The first injection step allows to obtain the first layer 11 of the component 10 (figs. 6 and 10).

According to some embodiments, during the first injection step, the method can comprise the cooling of the first layer 11 to a first cooling temperature T3.

According to some embodiments, in order to cool the first layer 11 the method can comprise the circulation of refrigerant fluids in the first cooling circuit 46 in order to cool at least one of either the first matrix 30 and/or the punch 29.

According to some embodiments, the method provides to use a first cooling temperature T3 comprised in the range between 35 °C and 55 °C, more preferably between 40 °C and 50 °C.

Subsequently, the method provides to position the punch 29 with the first layer 11 made thereon in the second molding assembly 28, positioning the second matrix 34 so as to define, together with the second surface 14 of the first layer 11, the second molding volume V2.

The second molding volume V2 is defined between the second surface 14 of the first layer 11, which comprises the filling cavities 19, and the second molding surface 35, as shown, for example, in the right hand side of fig. 7 and in fig 11.

The method then comprises a second injection step in which a second plastic material is injected into the second molding volume V2 at a second injection temperature T2 and at a second injection pressure P2.

According to a possible embodiment, the second injection step is immediately after the first injection step.

According to one embodiment, the method provides to use a second temperature T2 lower than the first injection temperature T1.

According to a preferred embodiment, the second injection temperature T2 is comprised in a range from 0.90 to 0.95 times the first injection temperature T1. In other words, the second injection temperature T2 is 5-10% lower than the first injection temperature T1.

According to one embodiment, the second pressure P2 can advantageously be lower than the first pressure P1.

According to one embodiment, the second pressure P2 can be comprised in a range from 0.70 to 0.90 times the first pressure P1. In other words, the second pressure P2 is 10-30% lower than the first pressure P1.

The second injection step produces the second external layer 12 of the component 10.

According to some embodiments, during the second injection step, the method can comprise the cooling of the second layer 12 to a second cooling temperature T4.

According to some embodiments, in order to cool the second layer 12 the method can comprise the circulation of refrigerant fluids in the second cooling circuit 47 in order to cool at least one of either the second matrix 34 and/or the punch 29 to the second cooling temperature T4.

According to some embodiments, the second cooling temperature T3 can be between 15% and 25% lower than the first cooling temperature T4.

According to a preferred embodiment, the second cooling temperature T4 can be comprised in the range between 25 °C and 45 °C, more preferably between 30°C and 40°C.

According to other embodiments, the method provides to produce the second external layer 12 with an external surface 15 provided with a three-dimensional finish, comprising an alternation of protruding portions 17 and recessed portions 18.

According to some embodiments, at the end of the second injection step, the method comprises decoupling the molding punch 29 and the second molding matrix 35, and extracting the component 10.

### Experimental Examples

The Applicant has carried out experimental tests, verifying that the injection and cooling temperatures T1, T2, T3, T4 and the injection pressures P1 and P2 can be modified, within the ranges considered, as a function of the difference between the thicknesses S1 and S2 of the first layer 11 and of the second layer 12.

Table 1 below shows possible ratios between work temperatures and pressures which can be used in the first and second injection steps, correlated to the ratio between thicknesses S1, S2.

| S [mm] | T1 [°C] 180+220 °C | T2 (<5%+10%) T1 | P1 700+1300 Kg/cm² | P2 (<10%+30%)P1 | T3 35+55 °C | T4 [C°] (<15%+25%) T3 |
|---|---|---|---|---|---|---|
| < 1,5 | 205+220 | 195+210 | 1100+1350 | 990+2215 | 35+55 | 26+41 |
| | | 185+198 | | 760+990 | | 23+36 |
| 1,5+2,5 | 190+205 | 180+195 | | | | |
| | | 170+198 | 850+1100 | 750+945 | 40+50 | 30+38 |
| > 2,5 | 175+190 | 166+180 | | | | |
| | | 157+180 | | 650+770 | | 26+33 |

It is clear that modifications and/or additions of parts or steps may be made to the apparatus 26 and to the method as described heretofore, without departing from the field and scope of the present invention.

It is also clear that, although the present invention has been described with reference to some specific examples, a person of skill in the art shall certainly be able to achieve many other equivalent forms of apparatus 26 and method, having the characteristics as set forth in the claims and hence all coming within the field of protection defined thereby.

## Claims

1. Apparatus (26) for the production of a component (10) made of plastic material, said component (10) being suitable to form a containing body of a household appliance (50) as a kettle (50A) or a toaster (50B), and being provided with at least one transparent area (T), said apparatus (26) comprising:
- a first molding assembly (27), comprising a punch (29) having a contrast surface (32) and a first matrix (30) having a first molding surface (33), suitable to define between them a first molding volume (V1) and a first injection unit (31) configured to inject a first opaque plastic material into said first molding volume (V1) and make a first layer (11);
- a second molding assembly (28), comprising a second matrix (34) having a second molding surface (35) suitable to define, together with said first layer (11) of said component (10) and with said punch (29), a second molding volume (V2), and a second injection unit (36) configured to inject a second transparent plastic material into said second molding volume (V2), to make a second layer (12) which completely covers said first internal layer (11),
wherein at least one of either said punch (29) or said first matrix (30) comprises at least one coupling protuberance (41) configured to limit at least one portion of said first molding volume (V1) to produce at least one exposed area (S) in said first layer (11) and said second molding volume (V2) extends inside said at least one exposed area (S) of said first layer (11) so that in use said second external layer (12) completely fills the at least one exposed area (S) of the first internal layer (11), thus defining part of an internal surface (13) of said component in continuity with the first material,
**characterized in that** said at least one coupling protuberance (41) comprises a protruding abutment element (42) configured to position itself, during use, in contact with one of either the contrast surface (32) of said punch (29) or the first molding surface (33) of said first matrix (30) so as to limit said first molding volume (V1) and define at the same time an empty space, or cavity (43), between said punch (29) and said first matrix (30) in correspondence with said exposed area (S),
wherein said abutment element (42) has a closed shape development with an annular profile or comprising rectilinear segments and curved segments, suitable to define an exposed area (S) in correspondence with a lateral wall of the first layer (11) of said component (10), and/or
said abutment element (42) has a closed shape development with an annular profile, which develops in a direction transverse to a vertical axis (X), so as to contact the punch (29) along a perimeter thereof and limit said first molding volume (V1) at the lower part.

2. Apparatus as in claim 1, **characterized in that** said abutment element (42) has a width of the portion which is positioned in contact with said contrast surface (32) or said first molding surface (33) comprised between 0.2 and 1.5 mm.

3. Apparatus as in claim 2, **characterized in that** said abutment element (42) has a width comprised between 0.9 and 1.5 mm.

4. Method for the production of a component (10) made of plastic material, said component (10) being suitable to form a containing body of a household appliance (50) as a kettle (50A) or a toaster (50B), and being provided with at least one transparent area (T), wherein said method comprises:
- a first step of injecting a first opaque plastic material into a first molding volume (V1) defined between a punch (29) and a first matrix (30) provided with a first molding surface (33) for the production of a first internal layer (11), wherein during said first step the method provides to limit at least one portion of the first molding volume (V1) in order to produce an exposed area (S) in said first layer (11);
- a second step of injecting a second at least partly transparent plastic material into a second molding volume (V2) defined between said first layer (11) obtained in the first injection step, said punch (29), and a second matrix (34) for the production of a second layer (12), wherein during said second injection step said method provides to cover said exposed area (S) with said second material so as to obtain a transparent area (T) in said component (10), wherein said second external layer (12) completely fills the at least one exposed area (S) of the first internal layer (11), thus defining part of an internal surface (13) of said component in continuity with the first material,
**characterized in that** during said first injection step it provides to position in contact with one of either said contrast surface (32) of the punch (29) or said first molding surface (33) of said first matrix (30) at least one protruding abutment element (42) of a coupling protuberance (41) of said first matrix (30), or respectively of said punch (29) so as to limit said first molding volume (V1) and at the same time define an empty space, or cavity (43), between said punch (29) and said first molding surface (33) in correspondence with said exposed area (S), wherein said abutment element (42) has a closed shape development with an annular profile or comprising rectilinear segments and curved segments, suitable to define an exposed area (S) in correspondence with a lateral wall of the first layer (11) of said component (10), and/or
said abutment element (42) has a closed shape development with an annular profile, which develops in a direction transverse to a vertical axis (X), so as to contact the punch (29) along a perimeter thereof and limit said first molding volume (V1) at the lower part.

5. Method as in claim 4, **characterized in that** it provides to position said abutment element (42) and said contrast surface (32) in contact with each other only for a width comprised between 0.2 and 1.5 mm.

6. Method as in any claim 4 or 5, **characterized in that** said second injection step is carried out immediately after said first injection step.

## Patentansprüche

1. Vorrichtung (26) zur Herstellung eines Bauteils (10) aus Kunststoffmaterial, wobei das Bauteil (10) zur Bildung eines Gehäuses eines Haushaltsgeräts (50), wie eines Kessels (50A) oder eines Toasters (50B), geeignet ist und mit mindestens einem transparenten Bereich (T) versehen ist, wobei die Vorrichtung (26) umfasst:
- eine erste Formanordnung (27), die einen Stempel (29) mit einer Kontrastfläche (32) und eine erste Matrize (30) mit einer ersten Formfläche (33) umfasst, die geeignet sind, zwischen sich ein erstes Formvolumen (V1) zu definieren, und eine erste Einspritzeinheit (31) umfasst, die so konfiguriert ist, dass sie ein erstes intransparentes Kunststoffmaterial in das erste Formvolumen (V1) einspritzt, um eine erste Schicht (11) herzustellen;
- eine zweite Formanordnung (28), die eine zweite Matrize (34) mit einer zweiten Formfläche (35) umfasst, die geeignet ist, zusammen mit der ersten Schicht (11) des Bauteils (10) und mit dem Stempel (29) ein zweites Formvolumen (V2) zu definieren, und eine zweite Einspritzeinheit (36) umfasst, die so konfiguriert ist, dass sie ein zweites transparentes Kunststoffmaterial in das zweite Formvolumen (V2) einspritzt, um eine zweite Schicht (12) herzustellen, die die erste innere Schicht (11) vollständig abdeckt,
wobei mindestens einer von dem Stempel (29) oder der ersten Matrize (30) mindestens einen Kupplungsvorsprung (41) aufweist, der so konfiguriert ist, dass er mindestens einen Teil des ersten Formvolumens (V1) begrenzt, um mindestens einen freiliegenden Bereich (S) in der ersten Schicht (11) zu erzeugen, und sich das zweite Formvolumen (V2) innerhalb des mindestens einen freiliegenden Bereichs (S) der ersten Schicht (11) erstreckt, so dass im Gebrauch die zweite äußere Schicht (12) den mindestens einen freiliegenden Bereich (S) der ersten inneren Schicht (11) vollständig ausfüllt, wodurch ein Teil einer inneren Oberfläche (13) des Bauteils in Kontinuität mit dem ersten Material definiert wird,
**dadurch gekennzeichnet, dass** der mindestens eine Kupplungsvorsprung (41) ein vorstehendes Anlageelement (42) umfasst, das so konfiguriert ist, dass es sich während des Gebrauchs selbst in Kontakt mit entweder der Kontrastfläche (32) des Stempels (29) oder der ersten Formfläche (33) der ersten Matrize (30) positioniert, so dass das erste Formvolumen (V1) begrenzt wird und gleichzeitig ein Hohlraum oder eine Kavität (43) zwischen dem Stempel (29) und der ersten Matrize (30) in Übereinstimmung mit dem freiliegenden Bereich (S) definiert wird,
wobei das Anlageelement (42) eine geschlossene Form mit einem ringförmigen Profil oder mit geraden Segmenten und gekrümmten Segmenten aufweist, die geeignet sind, einen freiliegenden Bereich (S) in Übereinstimmung mit einer Seitenwand der ersten Schicht (11) des Bauteils (10) zu definieren, und/oder
das Anlageelement (42) eine geschlossene Form mit einem ringförmigen Profil aufweist, das sich in einer Richtung quer zu einer vertikalen Achse (X) erstreckt, so dass es den Stempel (29) entlang seines Umfangs berührt und das erste Formvolumen (V1) im unteren Teil begrenzt.

2. Vorrichtung nach Anspruch 1, **dadurch gekennzeichnet, dass** das Anlageelement (42) eine Breite des Abschnitts, der in Kontakt mit der Kontrastfläche (32) oder der ersten Formfläche (33) positioniert ist, zwischen 0,2 und 1,5 mm aufweist.

3. Vorrichtung nach Anspruch 2, **dadurch gekennzeichnet, dass** das Anlageelement (42) eine Breite zwischen 0,9 und 1,5 mm aufweist.

4. Verfahren zur Herstellung eines Bauteils (10) aus Kunststoffmaterial, wobei das Bauteil (10) zur Bildung eines Gehäuses eines Haushaltsgeräts (50), wie eines Kessels (50A) oder eines Toasters (50B), geeignet ist und mit mindestens einem transparenten Bereich (T) versehen ist, wobei das Verfahren umfasst:
- einen ersten Schritt des Einspritzens eines ersten intransparenten Kunststoffmaterials in ein erstes Formvolumen (V1), das zwischen einem Stempel (29) und einer mit einer ersten Formfläche (33) versehenen ersten Matrize (30) definiert wird, zur Herstellung einer ersten inneren Schicht (11), wobei während des ersten Schritts das Verfahren vorsieht, mindestens einen Teil des ersten Formvolumens (V1) zu begrenzen, um einen freiliegenden Bereich (S) in der ersten Schicht (11) zu erzeugen;
- einen zweiten Schritt des Einspritzens eines zweiten, zumindest teilweise transparenten Kunststoffmaterials in ein zweites Formvolumen (V2), das zwischen der im ersten Einspritzschritt erhaltenen ersten Schicht (11), dem Stempel (29) und einer zweiten Matrize (34) definiert wird, zur Herstellung einer zweiten Schicht (12), wobei während des zweiten Einspritzschritts das Verfahren vorsieht, den freiliegenden Bereich (S) mit dem zweiten Material zu bedecken, um einen transparenten Bereich (T) in dem Bauteil (10) zu erhalten, wobei die zweite äußere Schicht (12) den mindestens einen freiliegenden Bereich (S) der ersten inneren Schicht (11) vollständig ausfüllt, wodurch ein Teil einer inneren Oberfläche (13) des Bauteils in Kontinuität mit dem ersten Material definiert wird,
**dadurch gekennzeichnet, dass** während des ersten Einspritzschritts vorgesehen ist, mindestens ein vorstehendes Anlageelement (42) eines Kupplungsvorsprungs (41) der ersten Matrize (30) bzw. des Stempels (29) in Kontakt mit entweder der Kontrastfläche (32) des Stempels (29) oder der ersten Formfläche (33) der ersten Matrize (30) zu positionieren, so dass das erste Formvolumen (V1) begrenzt wird und gleichzeitig ein Hohlraum oder eine Kavität (43) zwischen dem Stempel (29) und der ersten Formfläche (33) in Übereinstimmung mit dem freiliegenden Bereich (S) definiert wird,
wobei das Anlageelement (42) eine geschlossene Form mit einem ringförmigen Profil oder mit geraden Segmenten und gekrümmten Segmenten aufweist, die geeignet sind, einen freiliegenden Bereich (S) in Übereinstimmung mit einer Seitenwand der ersten Schicht (11) des Bauteils (10) zu definieren, und/oder
das Anlageelement (42) eine geschlossene Form mit einem ringförmigen Profil aufweist, das sich in einer Richtung quer zu einer vertikalen Achse (X) erstreckt, so dass es den Stempel (29) entlang seines Umfangs berührt und das erste Formvolumen (V1) im unteren Teil begrenzt.

5. Verfahren nach Anspruch 4, **dadurch gekennzeichnet, dass** es vorsieht, das Anlageelement (42) und die Kontrastfläche (32) nur über eine Breite zwischen 0,2 und 1,5 mm in Kontakt miteinander zu bringen.

6. Verfahren nach einem der Ansprüche 4 oder 5, **dadurch gekennzeichnet, dass** der zweite Einspritzschritt unmittelbar nach dem ersten Einspritzschritt durchgeführt wird.

## Revendications

1. Appareil (26) de production d'un composant (10) en matière plastique, ledit composant (10) étant adapté pour former un corps de contenant d'un appareil ménager (50) comme une bouilloire (50A) ou un grille-pain (50B), et étant pourvu d'au moins une zone transparente (T), ledit appareil (26) comprenant :
- un premier ensemble de moulage (27), comprenant un poinçon (29) ayant une surface de contraste (32) et une première matrice (30) ayant une première surface de moulage (33), adaptés pour définir entre eux un premier volume de moulage (V1) et une première unité d'injection (31) configurée pour injecter une première matière plastique opaque dans ledit premier volume de moulage (V1) et réaliser une première couche (11) ;
- un second ensemble de moulage (28), comprenant une seconde matrice (34) ayant une seconde surface de moulage (35) adaptée pour définir, conjointement avec ladite première couche (11) dudit composant (10) et avec ledit poinçon (29), un second volume de moulage (V2), et une seconde unité d'injection (36) configurée pour injecter une seconde matière plastique transparente dans ledit second volume de moulage (V2), pour réaliser une seconde couche (12) qui recouvre complètement ladite première couche (11) interne,
dans lequel au moins l'un dudit poinçon (29) ou de ladite première matrice (30) comprend au moins une saillie de couplage (41) configurée pour limiter au moins une partie dudit premier volume de moulage (V1) pour produire au moins une zone exposée (S) dans ladite première couche (11) et ledit second volume de moulage (V2) s'étend à l'intérieur de ladite au moins une zone exposée (S) de ladite première couche (11) de sorte qu'en utilisation, ladite seconde couche (12) externe remplit complètement ladite au moins une zone exposée (S) de la première couche interne (11), définissant ainsi une partie d'une surface interne (13) dudit composant en continuité avec la première matière,
**caractérisé en ce que** ladite au moins une saillie de couplage (41) comprend un élément de butée (42) saillant configuré pour se positionner, pendant l'utilisation, en contact avec l'une parmi la surface de contraste (32) dudit poinçon (29) ou la première surface de moulage (33) de ladite première matrice (30) de manière à limiter ledit premier volume de moulage (V1) et définir en même temps un espace vide, ou une cavité (43), entre ledit poinçon (29) et ladite première matrice (30) en correspondance avec ladite zone exposée (S),
dans lequel ledit élément de butée (42) présente un développement de forme fermée avec un profil annulaire ou comprenant des segments rectilignes et des segments incurvés, adaptés pour définir une zone exposée (S) en correspondance avec une paroi latérale de la première couche (11) dudit composant (10), et/ou
ledit élément de butée (42) présente un développement de forme fermée avec un profil annulaire, qui se développe dans une direction transversale à un axe vertical (X), de manière à entrer en contact avec le poinçon (29) le long d'un périmètre de celui-ci et à limiter ledit premier volume de moulage (V1) au niveau de la partie inférieure.

2. Appareil selon la revendication 1, **caractérisé en ce que** ledit élément de butée (42) a une largeur de la partie qui est positionnée en contact avec ladite surface de contraste (32) ou ladite première surface de moulage (33) comprise entre 0,2 et 1,5 mm.

3. Appareil selon la revendication 2, **caractérisé en ce que** ledit élément de butée (42) a une largeur comprise entre 0,9 et 1,5 mm.

4. Procédé de production d'un composant (10) constitué en matière plastique, ledit composant (10) étant adapté pour former un corps de contenant d'un appareil ménager (50) comme une bouilloire (50A) ou un grille-pain (50B), et étant pourvu d'au moins une zone transparente (T), dans lequel ledit procédé comprend :
- une première étape d'injection d'une première matière plastique opaque dans un premier volume de moulage (V1) défini entre un poinçon (29) et une première matrice (30) munie d'une première surface de moulage (33) pour la production d'une première couche (11) interne, dans lequel au cours de ladite première étape, le procédé prévoit de limiter au moins une partie du premier volume de moulage (V1) afin de produire une zone exposée (S) dans ladite première couche (11) ;
- une seconde étape d'injection d'une seconde matière plastique au moins partiellement transparente dans un second volume de moulage (V2) défini entre ladite première couche (11) obtenue à la première étape d'injection, ledit poinçon (29), et une seconde matrice (34) pour la production d'une seconde couche (12), dans lequel pendant ladite seconde étape d'injection ledit procédé prévoit de recouvrir ladite zone exposée (S) avec ladite seconde matière de manière à obtenir une zone transparente (T) dans ledit composant (10), dans lequel ladite seconde couche externe (12) remplit complètement ladite au moins une zone exposée (S) de la première couche (11) interne, définissant ainsi une partie d'une surface interne (13) dudit composant en continuité avec la première matière,
**caractérisé en ce que,** pendant ladite première étape d'injection, il prévoit de positionner en contact avec l'une parmi ladite surface de contraste (32) du poinçon (29) ou ladite première surface de moulage (33) de ladite première matrice (30) au moins un élément de butée (42) saillant d'une saillie de couplage (41) de ladite première matrice (30), ou respectivement dudit poinçon (29) de manière à limiter ledit premier volume de moulage (V1) et en même temps à définir un espace vide, ou une cavité (43), entre ledit poinçon (29) et ladite première surface de moulage (33) en correspondance avec ladite zone exposée (S),
dans lequel ledit élément de butée (42) présente un développement de forme fermée avec un profil annulaire ou comprenant des segments rectilignes et des segments incurvés, adaptés pour définir une zone exposée (S) en correspondance avec une paroi latérale de la première couche (11) dudit composant (10), et/ou
ledit élément de butée (42) présente un développement de forme fermée avec un profil annulaire, qui se développe dans une direction transversale à un axe vertical (X), de manière à entrer en contact avec le poinçon (29) le long d'un périmètre de celui-ci et à limiter ledit premier volume de moulage (V1) au niveau de la partie inférieure.

5. Procédé selon la revendication 4, **caractérisé en ce qu'**il prévoit de positionner ledit élément de butée (42) et ladite surface de contraste (32) en contact l'un avec l'autre uniquement sur une largeur comprise entre 0,2 et 1,5 mm.

6. Procédé selon l'une quelconque des revendications 4 ou 5, **caractérisé en ce que** ladite seconde étape d'injection est effectuée immédiatement après ladite première étape d'injection.
